# EUROPÄISCHE PATENTSCHRIFT

(11) **EP 0 663 848 B1**
(45) Veröffentlichungstag und Bekanntmachung des Hinweises auf die Patenterteilung: **06.03.1996**
(21) Anmeldenummer: 93921898.8
(22) Anmeldetag: 30.09.1993
(51) Int. Cl.: B01D 35/12, B01D 36/02, C10G 31/09

(54) **VORRICHTUNG ZUM FILTERN VON VERUNREINIGTEN FLÜSSIGKEITEN, WIE INSBESONDERE ALTÖL**
DEVICE FOR FILTERING POLLUTED LIQUIDS, IN PARTICULAR USED OIL
DISPOSITIF DE FILTRAGE DE LIQUIDES POLLUES, NOTAMMENT DES HUILES USEES

(30) Priorität: 03.10.1992 DE 4233302
(43) Veröffentlichungstag der Anmeldung: 26.07.1995
(73) Patentinhaber: WALTER MÖCK GMBH, D-72820 Sonnenbühl (DE)
(72) Erfinder: COUWENBERGS, Paul, D-76189 Karlsruhe (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9302684
(87) Internationale Veröffentlichungsnummer: WO9407587

(56) Entgegenhaltungen:
- US-A- 1 624 385
- US-A- 4 179 019
- US-A- 4 352 739

## Beschreibung

Die Erfindung betrifft eine Vorrichtung zum Filtern von verunreinigten Flüssigkeiten.

Es ist eine Vorrichtung mit Filter hoher Durchsatz-Leistung, der als Leistungsfilter bezeichnet werden kann, und einer Pumpe zum Fördern des Öls durch diesen Filter bekannt, die es ermöglicht, sehr grobe Fremdteilchen aus Altöl auszufiltern, damit dieses unter Reduzierung der Rückstände verbrannt werden kann. Das mit dieser gattungsgemäßen Vorrichtung gereinigte Öl kann dann in keiner Weise wiederverwendet werden, beispielsweise als Schmieröl.

Darüber hinaus sind große Anlagen, ganze Fabriken zur Reinigung und Wiederaufbereitung von Altöl bekannt, damit dieses neu- bzw. wiederverwendet werden kann. Bekannte Großanlagen sind eben nur großindustriell mit einem Kostenaufwand von mehreren zig Millionen DM herstellbar und nur wirtschaftlich, wenn von einem großen Einzugsgebiet sämtliche Altöle herantransportiert werden. Hiermit sind sehr hohe Transportkosten verbunden, die sich einerseits bei denjenigen, die Altöle abgeben, niederschlagen, andererseits wiederaufbereitete Öle gegenüber Neuölen noch nicht hinreichend wirtschaftlich machen. Insbesondere dort, wo Altöle anfallen, besteht daher die Neigung, diese nicht der Wiederverwertung zuzuführen, sondern in anderer Weise zu entsorgen, gegebenenfalls auch in nicht zulässiger.

Aus der US-A-4 179 019 ist eine Vorrichtung zum Wiedergewinnen benutzten Schmieröls bekannt. Die Druckschrift geht davon aus, daß große Mengen an Schmieröl nach Benutzung weggeschüttet werden, insbesondere in Automobilwerkstätten, die große Mengen von benutztem Motoröl von Kraftfahrzeugen zu entsorgen haben. Für eine Wiedergewinnung müßten diese Öle gesammelt und in abgedichteten Tonnen zu einer Ölfirma zurückgebracht werden, wo große industrielle Ölbehandlungsfabriken vorhanden sind. Dieser Aufwand gibt der Kraftfahrzeugwerkstatt, Tankstelle oder dem Ölbenutzer wenig Anregung, Öl zu sparen. Um die Wiedergewinnung von benutzten Schmierölen zu verbessern, sieht die US-A-4 179 019 ein Gerät vor, das Pumpen, Filter Wärmetauscher und eine unter Vakuum arbeitende Verdampfereinheit vorsieht, die in einem verfahrbaren Gehäuse angeordnet sind. Hiermit können individuelle Werkstätten oder Tankstellen und Ölbenutzer ihre eigene Einheit zur Behandlung von Öl besitzen, so daß die Wiederaufbereitung von gebrauchtem Öl wesentlich attraktiver werden soll.

Aus dem Vorstehenden ergibt sich, daß es sich hier um eine kleine, für den Hausgebrauch oder eine Werkstatt geeignete Aufbereitungsanlage handelt, die in vertretbarer Zeit lediglich eine geringe Ölmenge, wie sie in einem einzigen Kraftfahrzeugmotor vorhanden ist, behandeln kann, wie beispielsweise wenige Liter bis höchstens 5 oder 7 l. Eine größere Ölmenge kann auch deswegen nicht behandelt werden, weil lediglich in Reihe zu einem einzigen 5 Micron-Filter wiederum ein einziger Filter mit einer Durchlaßbreite von 0,5 Micron vorhanden ist. Hierdurch wird der Durchsatz wesentlich herabgesetzt. Darüber hinaus können mit der bekannten Vorrichtung nur Öle aufbereitet werden, die in Kraftfahrzeugmotoren benutzt wurden und nur wenige definitive Verunreinigungen, wie Kraftstoffanteile bzw. entstandene Kohlenstoffe, enthalten. Eine weitergehende Aufbereitung von Altölen, insbesondere solchen, die in der industriellen Fertigung mit Metallspänen oder dergleichen versetzt sind, ist mit dieser Vorrichtung nicht möglich.

Bei der US-A-4 352 739 handelt es sich um eine Vorrichtung zum Filtern von Fluiden, und zwar solchen Fluiden, die beim Ölbohren anfallen; es handelt sich also um Kühlflüssigkeiten. In der Druckschrift ist eine Vorrichtung nach dem Stand der Technik beschrieben, die drei Filter aufweist. Über die genauere Natur dieser Filter ist nichts gesagt. Da nur diese Filter vorgesehen sind, können nur Flüssigkeiten mit einem engen Spektrum von Festpartikelverunreinigungen gereinigt werden oder aber die Reinigung ist unbefriedigend, da bei einem großen Partikelspektrum die Filter sehr schnell unbrauchbar werden und ersetzt werden müssen. Darüber hinaus werden die Filter, falls Metallteilchen auftreten, notwendigerweise sehr schnell zugesetzt.

Die US-A-1 624 385 zeigt eine Vorrichtung zum Wiedergewinnen von Feststoffen aus Flüssigkeiten von Druckpressen mit einem sehr geringen Feststoffanteil. Hierzu weist die Vorrichtung einen Tank auf, in den die verunreinigte Flüssigkeit eingegeben wird. Oberhalb eines Siebes ist ein Flüssigkeitsauslaß angeordnet. Auf dem Boden befindet sich ein Extruder, mit dem die sich lediglich absetzenden Feststoffteilchen ausgefördert werden.

Der Erfindung liegt daher die Aufgabe zugrunde, unter Vermeidung der vorgenannten Nachteile eine gattungsgemäße Vorrichtung zum Filtern von Ölen dahingehend weiterzuentwickeln, daß durch sie mit einem gegenüber größerem Durchsatz in der Größenordnung von 5.000 bis 6.000 m³ pro Monat verunreinigte Flüssigkeiten, wie insbesondere Altöle, in einer Weise aufbereitet werden können, daß diese als Schmieröle wiederverwendbar sind. Gleiches gilt für Kühlmittel und Kühlwasser.

Die erfindungsgemäße Aufgabe wird durch eine Vorrichtung nach dem Anspruch 1 gelöst.

Bei dem Leistungsfilter handelt es sich um einen Filter, der wie der eingangs genannte lediglich grobe Teilchen ausfiltert, daher eine hohe Durchsatz-Leistung aufweist. Um die Gesamtleistung der Anlage gegenüber der Leistung dieses ersten Filters oder Leistungsfilters nicht zu reduzieren, sieht die Erfindung die Parallelanordnung mehrerer Feinstfilter vor.

Durch den Magnetfilter wird die Belastung der Feinstfilter reduziert und damit die erforderliche Frequenz zum Reinigen und Austauschen derselben ebenfalls vermindert. Magnetisierbare Teilchen, also insbesondere magnetisierbare Metalle werden so vorab aus dem Altöl entfernt, wobei im übrigen erreicht wird, daß Teilchen aus diesen weiß- oder schwarzglänzenden Metallen bis zu einer Größenordnung von bis zu 5 µm hinunter aus dem aufzubereitenden Öl entfernt werden.

Es hat sich gezeigt, daß durch die zusätzliche Vorsehung von Feinstfiltern die üblicherweise noch vorliegende Partikelgröße in der Größenordnung von 120 µm und mehr um einen Faktor von 10 bis 20, d.h. bis zu 5 µm hinunter reduziert werden kann, so daß also durch die erfindungsgemäße Vorrichtung gereinigte und aufbereitete Öle nur noch Partikel bis zu dieser Größenordnung, maximal 15 µm enthalten, und der Partikelanteil in den Ölen ebenfalls um einen Faktor in der Größenordnung von 20 reduziert wird. So ergab sich bei einem konkreten Versuch, daß durch die erfindungsgemäß ausgestaltete Vorrichtung die gravimetrische Verunreinigung nach ISO/DIS 4405 von 427 mg/l auf 26 mg/l reduziert werden konnte.

Die Pumpe ist vorzugsweise dem ersten Filter vorgeordnet. Weitere bevorzugte Ausgestaltungen sehen vor, daß die Feinstfilter gruppenweise zur Behandlung der Flüssigkeit zuschaltbar sind. Hierdurch wird erreicht, daß von der vorhandenen Vielzahl von Feinstfiltern eine oder mehrere Gruppen weiter zur Filterung verwendet werden können, damit die erfindungsgemäße Vorrichtung in Betrieb bleibt, während zumindestens eine Gruppe aus dem Durchlauf der Flüssigkeit ausgeschaltet wird und daher diese Feinstfilter gereinigt bzw. die Filtermaterialien ausgewechselt werden können. Dies trägt zu einem wirtschaftlichen Betrieb der erfindungsgemäßen Vorrichtung bei.

Die Feinstfilter sind dabei vorzugsweise derart ausgebildet, daß die Feinstfilter ein zylindrisches Gehäuse mit einer zentralen Hohlachse aufweisen und daß zwischen beiden Filtermaterial angeordnet ist, wobei derartige Feinstfilter an sich dem Filterteil von Filtern entsprechen, wie sie beispielsweise der DE-OS 39 38 686 oder der DE-GM 89 13 769 zu entnehmen sind, deren Inhalt insofern vollauf zum Gegenstand der vorliegenden Anmeldung gemacht wird.

Im Hinblick auf mögliches Aus laufen von Öl beim Reinigen und Auswechseln der Feinstfilter sieht eine bevorzugte Ausgestaltung vor, daß unter den Feinstfiltern eine oder mehrere Ölauffangwannen angeordnet sind.

Zu einer effektiven Reinigung von Teerölen, die auch mit Sanden versehen sein können, trägt darüber hinaus bevorzugterweise bei, daß stromab von Pumpe und erstem Filter hoher Leistung eine Heizeinrichtung mit einem Wasser-Entdampfungs-Durchlaufgerät vorgeordnet sein kann.

Weitere bevorzugte Ausgestaltungen sehen vor, daß die Eingangsstufe ein mit einem Sieb versehener Vorlagerungstank ist. Hierdurch können ganz grobe Teilchen mit einem von dem aufzubereitenden Öl erheblich unterschiedlichen Gewicht vorab durch Ablagerung im Vorlagerungstank entfernt werden, so daß diese die eigentliche Filter- und Reinigungsanordnung nicht belasten.

Während bei der ersten erfindungsgemäßen Ausgestaltung der zusätzliche Magnetfilter bevorzugt innerhalb der Feinstfiltereinrichtung angeordnet ist, ist bei einer weiteren erfindungsgemäßen Ausgestaltung der Vorrichtung vorgesehen, daß der Magnetfilter die Eingangsstufe der Vorrichtung ist. An dem Magnetfilter ist dann in bevorzugter Ausgestaltung eine Pumpe mit einem Hebel angeordnet, durch den je nach verwendeter Flüssigkeit diese entweder zu einem Durchlauferhitzer oder aber zu einem Kantenspaltfilter bzw. Separator weitergeleitet wird. Aufgrund dieser Ausgestaltung ist es möglich, sowohl Öle, Altöle bzw. Teeröle, aber auch Kühlmittel bzw. Kühlwasser zu reinigen, wobei letztere nach dem Durchlauf von Großanlagen erwärmt zum Magnetfilter der Eingangsstufe gelangen. Diese erwärmte Flüssigkeit kann dann durch einen erfindungsgemäß vorgesehenen Wärmetauscher bzw. ein Kühlaggregat auf die notwendige Temperatur abgekühlt werden. Öle können entsprechend auf die notwendige Temperatur erwärmt werden. Durch den Kantenspaltfilter bzw. Separator wird im Kühlmittel bzw. im Kühlwasser vorhandenes Öl vom Wasser und Abrieb getrennt, so daß diese von der aufzubereitenden Flüssigkeit bereits im Vorlauf vor den Feinstfiltern getrennt werden kann. Auf diese Weise wird die eigentliche Filter- und Reinigungsanordnung nicht belastet. Entsprechend werden bei der Reinigung von Ölen metallische Teilchen über einen Magnetschocker, ein Breitflächenfilter sowie eine Vliesrolle aus den Ölen entfernt. Damit belasten auch diese Teilchen die eigentliche Filter- und Reinigungsanordnung nicht.

Weiterbildungen sehen vor, daß ein Doppelfilter vorgesehen ist, durch das wechselweise durch Umschalten Flüssigkeit filterbar ist.

Damit ist bei der zweiten erfindungsgemäßen Ausgestaltung der Vorrichtung nur eine Anlage notwendig, um Öle bzw. Kühlmittel/-wasser effektiv zu reinigen.

Zur Überprüfung der Arbeit der erfindungsgemäßen Vorrichtung kann weiterhin vorgesehen sein, daß Sichtfenster in Vor- und/oder Rücklauf angeordnet sind und daß eine Probenentnahmestelle vorhanden ist. Um den Durchsatz zu überprüfen, sieht eine bevorzugte Ausgestaltung einen Durchflußmesser vor.

Durch die Erfindung wird eine Vorrichtung geschaffen, die transportabel am Anfallsort von Altölen angeordnet werden kann, wie bei Speditionen, Busunternehmen, in Fabriken, bei denen Maschinen mit Öl betrieben werden etc., so daß diese Betriebe das bei ihnen anfallende Altöl selbständig aufbereiten und wiederverwenden können, ohne auf Dritte angewiesen zu sein. Dies gilt auch für größere Kraftfahrzeugwerkstätten, die als Dienstleistungsbetriebe für Dritte dienen und das Öl ihrer Kunden wechseln.

Darüber hinaus können erfindungsgemäße Vorrichtungen, die transportabel sind, auch als regionale kleinere zentrale Sammel- und Aufbereitungsstellen für Tankstellen und kleinere Kraftfahrzeugwerkstätten vorgesehen werden, bei denen sich eine eigene Aufbereitung noch nicht lohnt.

Insgesamt werden hierdurch aufwendige Transportwege und Transportkosten eingespart. Die Kosten für eine erfindungsgemäße Anlage liegen trotz des relativ hohen Durchsatzes und damit der relativ hohen Leistung in quantitativer Hinsicht sowie auch der hohen Leistung in qualitativer Hinsicht, nämlich der Verbesserung des Reinheitsgrades um einen Faktor 100, unterhalb derer zentraler Anlagen. Die erfindungsgemäße Vorrichtung kann wesentlich wirtschaftlicher betrieben werden, als dies bei den bekannten Großanlagen der Fall ist, insbesondere da ein kontinuierlicher hoher Anfall von Altölen zu einer wirtschaftlichen Betriebsweise nicht erforderlich ist.

Wenn vorstehend als Größenordnung eine Monatsleistung von 5.000 bis 6.000 m³ bei einem Kostenaufwand für den Erwerb der Vorrichtung von etwa 150.000,- DM (ohne Heizeinrichtung) genannt wurde, so kann die Anlage auch an den tatsächlich zu erwartenden Altölanfall angepaßt werden, indem sie beispielsweise für einen kleineren oder größeren Durchsatz ausgelegt wird, wobei insbesondere durch die Ausgestaltung mit parallel im Ölförderweg angeordneten Feinstfiltern sich eine Reduzierung des Volumendurchsatzes auch preismäßig vorteilhaft auswirkt.

Weitere Vorteile und Merkmale der Erfindung ergeben sich aus den Ansprüchen und aus der nachfolgenden Beschreibung, in der ein Ausführungsbeispiel der erfindungsgemäßen Vorrichtung unter Bezugnahme auf die Zeichnung im einzelnen erläutert ist. Dabei zeigt:
- Figur 1: eine schematische Gesamtdarstellung einer ersten Ausführungsform der erfindungsgemäßen Vorrichtung;
- Figur 2: eine vergrößerte und etwas detailliertere Ausgestaltung der eigentlichen Filter- und Reinigungseinrichtung in Seitenansicht;
- Figur 3: die Einrichtung der Figur 2 in Stirnansicht, teilweise geschnitten;
- Figur 4: eine schematische Gesamtdarstellung einer zweiten Ausführungsform der erfindungsgemäßen Vorrichtung;
- Figur 5: eine rückwärtige Draufsicht auf eine Feinstfilterbatterie; und
- Figur 6: die Feinstfilterbatterie aus Figur 5 in Seitenansicht.

Die erfindungsgemäße Vorrichtung weist in der dargestellten ersten Ausführungsform zunächst einen Vorlagerungstank 1 auf, in dem ein Absetzen von insbesondere größeren Teilchen mit deutlich größerem spezifischem Gewicht als dem der zu filternden Flüssigkeit erfolgen kann. In der Regel sollte die Flüssigkeit in diesem Vorlagerungstank 24 Stunden lagern, bevor sie der Weiterverarbeitung mit der erfindungsgemäßen Vorrichtung zugeführt wird.

Der Vorlagerungstank 1 weist ein Einlaßrohr 51 auf, das bis unter Siebe 52 ragt. In den Vorlagerungstank bis über die Siebe 52 ragt ein Saugrüssel 2, über den die Flüssigkeit aus dem Vorlagerungstank 1 mittels einer Pumpe abgesaugt wird. Die Siebe verhindern, daß grobe Partikel bis zu einem Saugkopf 2a des Saugrüssels 2 aufsteigen können und mit abgesaugt werden. Der Saugkopf 2a des Saugrüssels 2 ist als Schwimmer ausgebildet, so daß der Kopf immer auf der Flüssigkeitsoberfläche 53 - unabhängig vom Füllstand - aufliegt und der Saugrüssel 2 nur aus dem oberen Bereich der Flüssigkeit diese absaugt. Damit der Saugkopf 2a dem Flüssigkeitsniveau folgen kann, ist der Saugrüssel 2 zumindest in axialer Richtung beweglich ausgebildet; hierzu kann er, wie dargestellt, als Teleskoprohr 54 ausgestaltet sein; alternativ könnte er ein flexibler Schlauch sein.

Im dargestellten Ausführungsbeispiel befindet sich unterhalb der Siebe 52 im Bereich der Mündung des Einlaßrohrs 51 ein Extruder 55 mit auf seinem Umfang angeordneten stationären Magneten 56. Die Magnete ziehen magnetisierbare Partikel, insbesondere größere, an; dies wird durch die Bewegung der Flüssigkeit durch den Extruder erleichtert. Hierzu kann weiterhin Luftzufuhr in die Flüssigkeit beitragen. Die an den Magneten 56 gelagerten Partikel werden dann von dem Extruder abgestreift und durch diesen aus dem Tank 1 herausgeführt.

In einer an den Saugrüssel 2 anschließenden Absaugleitung 2b ist ein Vorsatzgrobfilter 57 angeordnet.

Diesem kann sich - für die Verarbeitung von Teerölen - eine Heizeinheit 3 anschließen, um zu reinigende Teeröle zu erhitzen und ihnen hierdurch einerseits eine niedrigere Viskosität zu verleihen, andererseits vorhandene Wasser-Feuchtigkeit aus der Flüssigkeit auszutreiben. Hierzu erfolgt eine Erhitzung bis über 100°, so daß Wasser verdampft wird und ausgeschieden werden kann.

Dies erfolgt in einem Wasser-Entdampfungs-Durchlaufgerät 4, das sich an die Heizeinheit 3 anschließen kann.

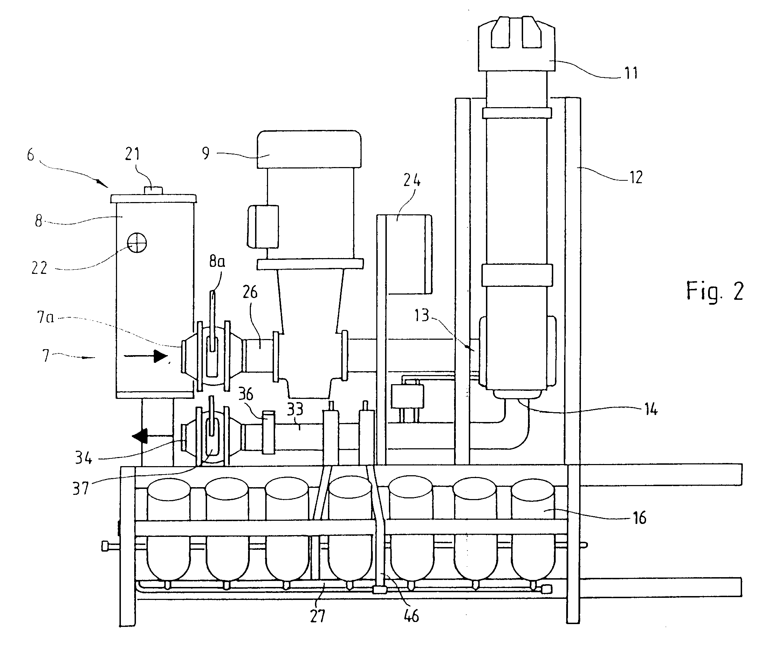

Diesem folgt die eigentliche Filtereinrichtung 6 mit einem Einlaß 7, einem Magnetfilter 8, dem Pumpaggregat 9, das vorzugsweise ein Zahnradpumpenaggregat mit einem Druck von 0,6 bar und einer Leistung von mehreren Kilowatt ist. Der Pumpe 9 schließt sich dann ein erstes Filter 11 relativ hoher Leistung zum Ausfiltern grober Partikel an, das im folgenden als Leistungsfilter bezeichnet wird. Vorzugsweise kann hier ein Filter eingesetzt werden, wie es unter der Bezeichnung SLE 270 030 von der Firma EPE Eppensteiner GmbH & Co. Filterbau in D-68775 Ketsch angeboten wir. Das Leistungsfilter 11 wird durch einen Rahmen 12 getragen. Der Einlaß des Leistungsfilters 11 erfolgt seitlich bei 13 (Fig. 2), während der Auslaß mittig unterhalb des Filters 11 bei 14 erfolgt. Derartige Leistungsfilter sind an sich bekannt.

Das im Leistungsfilter warm gefilterte Öl wird anschliessend Feinstfiltern 16 zugeführt, die noch kleinste Partikel aus dem erwärmten Öl ausfiltern und schließlich über den Auslaß 17 zur weiteren bzw. Neuverwendung abgeben.

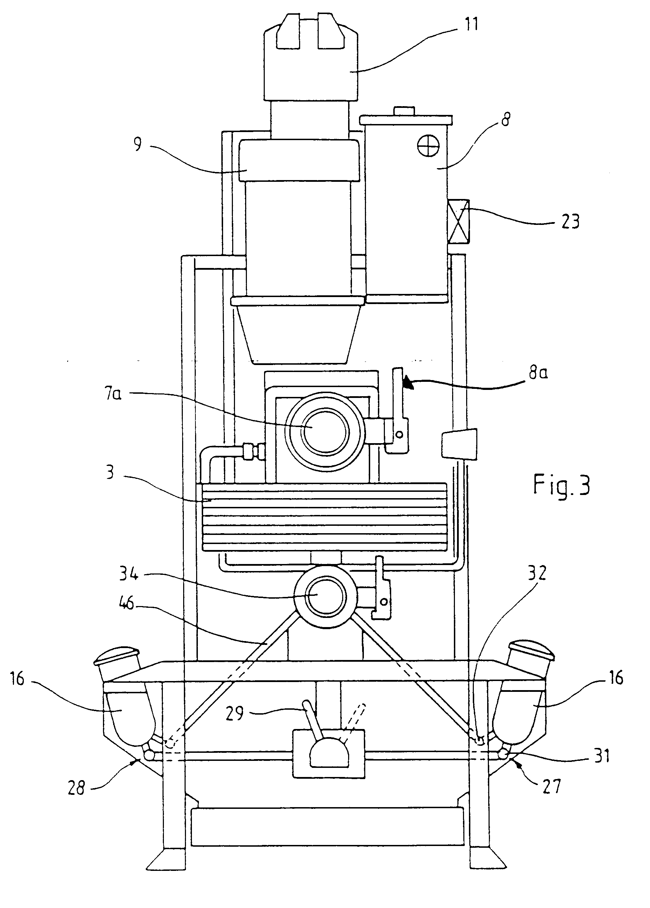

Der Magnetfilter 8 weist einen sehr starken Magneten auf, mittels dessen magnetisierbare Teilchen aus dem Strömungsweg herausgezogen werden. An der Oberseite des Magnetfilters 8 ist ein Entlüftungsventil 21 vorgesehen. Der Magnetfilter 8 weist weiterhin eine Anzeige 22 auf. Darüber hinaus ist er mit einem eigenen Schalter 23 versehen, so daß er wahlweise ein- oder ausgeschaltet werden kann (Fig. 3).

Zur elektrischen Versorgung und Schaltung der gesamten Anlage ist ein Klemmenkasten 24 vorgesehen.

Dem Pumpaggregat 9 ist ein Grob- oder Vorsatzfilter 26 vorgeordnet, so daß verhindert wird, daß ganz grobe Teilchen in das Pumpaggregat 9 gelangen und dieses beeinträchtigen oder beschädigen, soweit solche Teilchen nicht schon im Vorlagerungstank 1 ausgeschieden wurden, beispielsweise weil sie kein sehr unterschiedliches spezifisches Gewicht von der Flüssigkeit haben oder aber im Einzelfall auf einen solchen Vorlagerungstank verzichtet wurde.

Zwischen Magnetfilter 8 und Pumpaggregat 9 ist darüber hinaus am Einlaß 7a eine Absperrklappe 8a vorgesehen, um gegebenenfalls eine Absperrung des Systems vorzunehmen. Hier kann darüber hinaus ein Sichtfenster ausgebildet sein, durch welches die Konsistenz, insbesondere Trübung der Flüssigkeit im Vergleich mit der am Auslaß abgegebenen Flüssigkeit, wo ebenfalls ein Sichtfenster vorgesehen sein kann, überprüft werden kann.

Die über den Leistungsfilter 11 gereinigte Flüssigkeit wird über einen Abzweig 46 der Auslaßleitung zwei parallel verlaufenden Verteilerrohren 27, 28 zu zwei, also jeweils einer Gruppe von mehreren Feinstfiltern 16 zugeleitet. Über den Wechselschalter 29 kann dabei die Flüssigkeit entweder der einen Gruppe von Feinstfiltern oder der anderen Gruppe von Feinstfiltern oder aber gleichzeitig beiden zugeführt werden. Die beiden ersten Alternativen ermöglichen, daß trotz Betriebs der Anlage die Feinstfilter, denen die Flüssigkeit gerade nicht zugeleitet wird, ausgewechselt werden können und daher hierzu die Anlage nicht vollständig stillgelegt werden muß. Die Flüssigkeit tritt über einen an der Unterseite der Feinstfilter angeordneten mittigen Einlaß 31 jeweils in einen Feinstfilter 16 ein und über einen ebenfalls an der Unterseite angeordneten seitlichen Auslaß 32 wieder aus diesem aus und wird über Sammelleitungen dem Hauptrohr 33 und in diesem zum Auslaufflansch 34 geführt. In der Hauptleitung 33 kann ein Durchflußmeßgerät 36 angeordnet sein. Weiterhin ist vor dem Auslaufflansch ein Sichtfeld 37 vorgesehen.

Auch hier kann eine Sperreinrichtung angeordnet sein.

Altöl, aber auch zu reinigende Teeröle werden zunächst in den Vorlagerungstank eingebracht und dort über eine hinreichende Zeitdauer, beispielsweise 24 Stunden, zwischengelagert, damit größere Festteilchen schon dort abgetrennt werden. Gegebenenfalls kann eine Vielzahl von Vorlagerungstanks vorgesehen sein, mit denen die Filtereinrichtung dann jeweils verbunden wird.

Das Öl wird anschließend aus dem Vorlagerungstank 1 über den Saugrüssel 2 mittels des Pumpaggregats 9 abgesaugt und - bei Teerölen - zunächst durch die Heizanlage 3 geführt, in der es auf eine Temperatur in der Größenordnung von 100° C aufgeheizt wird, so daß über das Wasser-Entdampfungsdurchlaufgerät 4 die Wasserfeuchtigkeit abgegeben werden kann.

Anschließend tritt die zu reinigende Flüssigkeit in den Magnetabscheider 8, in dem magnetisierbare Teilchen abgetrennt werden. Die Flüssigkeit wird dann durch das Pumpaggregat weiter durch den Leistungsfilter 11 gedrückt und dort eine erste Filterung durchgeführt. Anschließend wird die Flüssigkeit durch die Feinstfilter 16 gedrückt, in denen noch kleinste Teilchen bis hinunter zu einer Grössenordnung von etwa 15 µm herausgefiltert werden. Nach Durchgang durch die Feinstfilter 16 kann das gereinigte Öl über den Auslauf 34 abgegeben und seiner Neu- bzw. Wiederverwertung zugeführt werden.

In einer weiteren dargestellten Ausführungsform weist die erfindungsgemäße Vorrichtung zunächst einen Magnetfilter 101 mit Selbstreinigungsvorrichtung als Vorfilter auf, in den die Flüssigkeit über eine Schwerkraftleitung 102 eingeleitet wird. In dem Magnetfilter 101 findet eine magnetische Vorfiltration statt, indem magnetisierbare Partikel durch Magnete der Flüssigkeit entzogen werden. Dabei werden grobe, eisenhaltige Partikel derart zu einem Filterkuchen aufgebaut, daß auch kleinere Schmutzpartikel auf diese Weise der Flüssigkeit entzogen werden. Hat die Kammer (nicht gezeichnet) zur Aufnahme des Filterkuchens einen gewissen Füllungsgrad erreicht, dann wird dieser automatisch daraus entfernt.

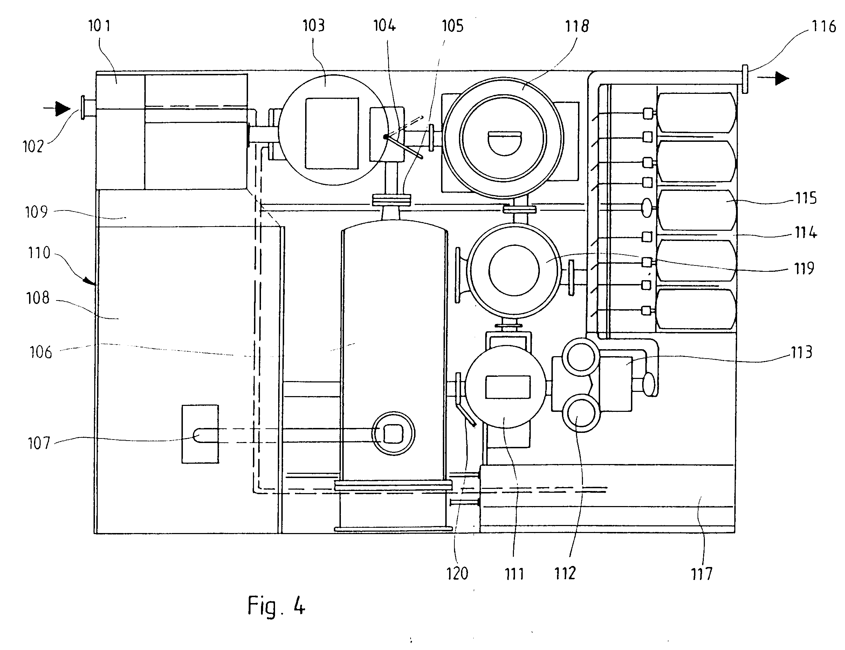

Die in Figur 4 dargestellte Vorrichtung ist sowohl zum Filtern von Altöl, Hydrauliköl, Teeröl als auch zum Filtern und Reinigen von Kühlwasser von Maschinen und von Kühlmitteln aus Werkzeug-Anlagen einsetzbar. Bei der Filtrierung der erstgenannten Medien gelangt die Flüssigkeit nach entsprechender Einstellung eines Hebels 104, der an einer Pumpe 103 angeordnet ist, über einen Einlaß 105 in einen Durchlauferhitzer 106. Die Pumpe 103 mit einem Druck von 4 bis 5 bar entnimmt die durch den Magnetfilter 101 vorgereinigte Flüssigkeit einer unter dem Magnetfilter 101 angeordneten, als Vortank dienenden Kammer (nicht dargestellt). Um bei einem Durchsatz von 2 m³/h die Flüssigkeit auf 80 °C zu erwärmen, weist der Durchlauferhitzer 106 bevorzugt eine Heizleistung von 84, 6 KW auf. Mittels dieses Durchlauferhitzers 106 wird den zu reinigenden Ölen einerseits eine niedrigere Viskosität verliehen, andererseits wird vorhandenes Wasser, vorhandene Feuchtigkeit aus der Flüssigkeit ausgetrieben. Der Durchlauferhitzer 106 ist mit einem Überdruckventil und Wärmeregler versehen, um ein Überhitzen der Flüssigkeit auszuschließen. An den Durchlauferhitzer 106 schließt sich ein Elektromagnetschocker 107 an. Durch dessen Einfluß agglomerieren die feinen metallischen Teilchen. Dem Elektromagnetschocker 107 ist eine mechanische Filterstufe 108 als Filter hoher Leistung oder Leistungsfilter nachgeschaltet. Bei dieser Filterstufe handelt es sich um einen Breitflächen- oder Breitbettfilter 108. Auf diesem Breitflächenfilter lagern sich die agglomerierten Teilchen sowie Abrieb, Schlamm, Ruß etc. ab und bilden so einen Filterkuchen. Der Durchsatz beträgt bevorzugt 220 l/min. Er kann bei Großanlagen aber auch 400 oder 600 l/min betragen. Über eine als Endlosrolle dienende Vliesrolle (nicht dargestellt) werden die den Filterkuchen bildenden Partikel am Ende 109 dieses Filterbereiches 110 fast trocken ausgetragen.

Über eine zweite Pumpe 111 gelangt die vorgefilterte Flüssigkeit zu einem Doppelfilter 112. Durch diesen Doppelfilter 112, dessen Filter wahlweise geschaltet werden können, wird verhindert, daß eventuell noch vorhandene gröbere Partikel in die Feinstfilteranlage gelangen. Bei dem Doppelfilter 112 kann es sich um Keramik- oder Papierkartuschen-Filter handeln. Es kann aber auch ein Edelstahlsieb eingesetzt werden, dessen Porengröße 3 bis 5 µm beträgt.

Direkt mit dem Doppelfilter verbunden oder aber diesem nachgeordnet kann ein Durchlaufzähler 113 sein. Dieser kann ein Permanent- oder Tageszählwerk aufweisen. Auf diese Weise ist der Durchsatz bei der Altölreinigung überprüfbar. Danach gelangt die gefilterte Flüssigkeit in die Feinstfilteranlage 114 und wird dort den Feinstfiltern 115 zugeführt. Diese filtern noch kleinste Partikel aus der Flüssigkeit aus und geben diese über einen Auslaß 116 weiter, über den das feingefilterte Medium in einen nicht dargestellten Leertank zur Aufnahme des gereinigten Mediums, inbesondere Öls, gelangt. Mittels der Feinstfilteranlage 114 werden insbesondere Reststoffe der Metalle wie Blei, Zink, Aluminium, Ruß, Emulsionen und Wasser zu einem Höchstmaß herausgefiltert.

Des weiteren weist die erfindungsgemäße Vorrichtung bei dieser Ausgestaltung einen Schaltkasten 117 auf, über den sämtliche Schaltungen erfolgen und der Warn- und Überlastungsanzeigen aufweist und, falls notwendig, die gesamte Anlage stillstellt bzw. abschaltet.

Wird die in Figur 4 dargestellte erfindungsgemäße Vorrichtung zur Kühlmittel- bzw. Kühlwasserreinigung verwendet, dann durchläuft das Medium, besonders dann, wenn hohe Wasseranteile abgesondert werden müssen, das nach dem Durchlauf von Großanlagen eine Temperatur von etwa 50 bis 70 °C aufweist, ebenso wie die Öle das Magnetfilter 101. Hiernach gelangt das Medium über die Pumpe 103 nicht zum Durchlauferhitzer 106, sondern wird nach Umstellung des Hebels 104 einem Kantenspaltfilter 118 zugeführt. Mittels dieses Kantenspaltfilters 118 werden Öle vom Wasser und Abrieb getrennt. Durch ein nicht dargestelltes Ventil im unteren Bereich des Kantenspaltfilters 118 wird bei Verschmutzung fester Schlamm bzw. diese Verschmutzung entfernt. Statt eines Kantenspaltfilters 118 kann auch ein Separator eingesetzt werden.

Nach dieser Filterung gelangt das flüssige Medium zu einem Wärmetauscher bzw. Kühlaggregat 119 und wird dort auf etwa 20 °C herabgekühlt. Diesem Wärmetauscher 119 ist die Feinstfiltrieranlage 114 entweder direkt nachschaltbar, oder aber das Medium gelangt nach Umschalten eines Hebels 120 über die Pumpe 111, den Doppelfilter 112 sowie eventuell den Durchflußmesser 113 in die Filtrieranlage 114. Das Umstellen des Hebels 120 erfolgt dabei über den Schaltkasten 117.

Die gesamten Bauteile 101 bis 120 sind auf einem gemeinsamen Unterbau (nicht dargestellt) montiert, der mit Stahlrahmen verstärkt werden kann. Die Gesamtanlage ist fahrbar oder stationär ausführbar, inklusive aller erforderlichen Rohrleitungen, Anschlüsse und Armaturen. Am Aufstellort/-platz sind dann lediglich noch die Stromanschlüsse sowie die Zuführungen und Abflüsse für die Flüssigkeit zu installieren.

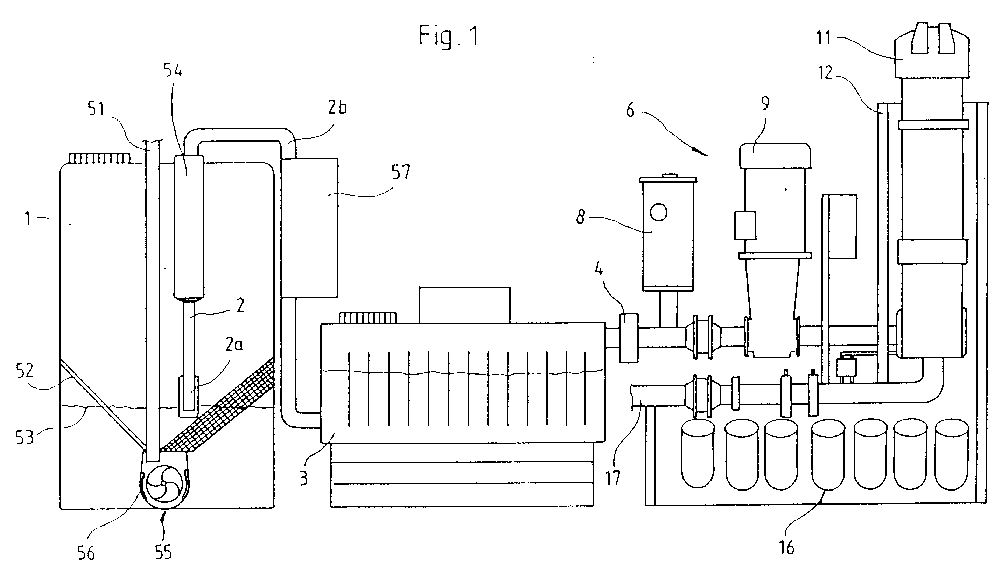

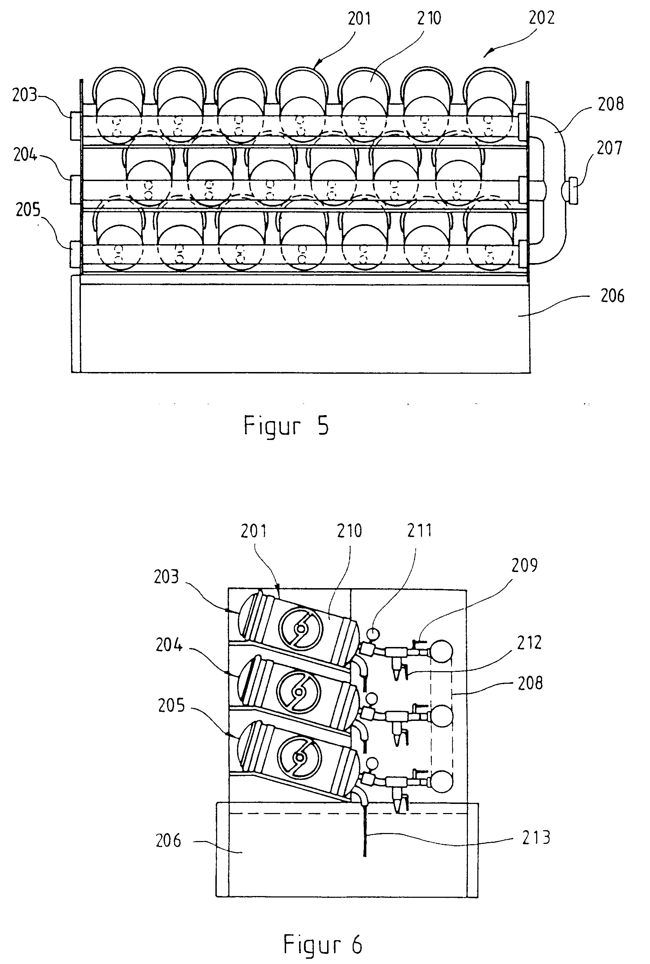

Die in den Figuren 5 und 6 dargestellte Anordnung von Feinstfiltern 201 ist sowohl für die Feinstfilter 16 aus Figur 1 bis 3 sowie die Feinstfilter 115 aus Figur 4 verwendbar. Die Feinstfilteranlage weist dabei eine Feinstfilterbatterie 202 auf, die im dargestellten Ausführungsbeispiel 3 jeweils versetzt gegeneinander angeordnete Einheiten 203, 204, 205 mit den Feinstfiltern 201 aufweist. Unterhalb der Feinstfilterbatterie 202 ist ein Tank 206 zur Aufnahme des gereinigten Mediums angeordnet. Über einen Einlauf 207 mit Verteilerrohren 208 wird das erwärmte bzw. abgekühlte Medium den einzelnen Einheiten 203, 204, 205 zugeführt. An den einzelnen Verteilerrohren 208 sind jeweils Abstellhähne 209 angeordnet. Hierdurch kann je eine Einheit 203, 204, 205 stillgelegt werden, um die Feinstfilter 201 auszuwechseln. Die Feinstfilter 201 weisen jeweils ein Feinstfiltergehäuse 210 mit Deckel und Schellenverschluß auf. Vor dem Feinstfiltergehäuse 210 befindet sich der Einlauf mit einem Druckbarometer 211. Zwischen dem Absperrhahn 209 und dem Druckbarometer 211 ist ein Ablauf 212 für Schlamm und Abrieb vorgesehen. Nach erfolgter Reinigung im Feinstfilter 201 gelangt das gereinigte Medium zum Auslauf 213, der bevorzugt ein Rückschlagventil aufweist. Über diesen Auslauf 213 gelangt das Medium entweder in den dargestellten Tank 206 oder aber auch in eine Rohrleitung, um seiner Neu- bzw. Wiederverwertung zugeführt zu werden.

## Patentansprüche

1. Vorrichtung zum Filtern von verunreinigten Flüssigkeiten, insbesondere Ölen, Altölen, Teerölen, aber auch Kühlmitteln, Kühlwasser oder dergleichen, mit Filtern und mit mindestens einer die Flüssigkeit durch die Filter drückenden Pumpe (9, 103), wobei einem Leistungsfilter (11, 108) mehrere zusätzliche im Strömungsweg parallel zueinander angeordnete Feinstfilter (16, 115, 201) nachgeordnet sind und ein Magnetfilter (8, 101) mit einem einschaltbaren Magneten zum Herausziehen von magnetisierbaren Feststoffteilchen aus der Flüssigkeit vorgesehen ist.

2. Vorrichtung nach Anspruch 1, dadurch gekennzeichnet, daß die Pumpe (9) dem Leistungsfilter (11) vorgeordnet ist.

3. Vorrichtung nach Anspruch 1 oder 2, dadurch gekennzeichnet, daß die Feinstfilter (16, 115, 201) gruppenweise zur Behandlung der Flüssigkeit zuschaltbar sind.

4. Vorrichtung nach einem der Ansprüche 1 bis 3, dadurch gekennzeichnet, daß die Feinstfilter (16, 115, 201) ein zylindrisches Gehäuse mit einer zentralen Hohlachse aufweisen und daß zwischen beiden Filtermaterial angeordnet ist.

5. Vorrichtung nach einem der vorangehenden Ansprüche, dadurch gekennzeichnet, daß die Eingangsstufe ein mit mindestens einem Sieb (52) versehener Vorlagerungstank ist.

6. Vorrichtung nach Anspruch 5, dadurch gekennzeichnet, daß Einlaß (51) zum und Auslaß (2, 2a) aus dem Tank (1) auf verschiedenen Seiten des Siebs (52) angeordnet sind.

7. Vorrichtung nach Anspruch 5 oder 6, dadurch gekennzeichnet, daß der Auslaß (2, 2a) aus dem Tank (1) mit einem Schwimmer versehen ist.

8. Vorrichtung nach einem der Ansprüche 5 bis 7, dadurch gekennzeichnet, daß unterhalb des Einlasses (51) ein Extruder (55) angeordnet ist.

9. Vorrichtung nach Anspruch 8, dadurch gekennzeichnet, daß dem Extruder (55) stationäre Magnetbacken (56) derart zugeordnet sind, daß der Extruder (55) dort gesammelte magnetisierbare Grobteilchen abstreifen und aus dem Tank (1) führen kann.

10. Vorrichtung nach einem der vorangehenden Ansprüche, dadurch gekennzeichnet, daß stromab von Pumpe (9) und erstem Filter (11) eine Heizeinrichtung (3) mit einem Wasser-Entdampfungs-Durchlaufgerät (4) vorgeordnet ist.

11. Vorrichtung nach einem der Ansprüche 1 bis 10, dadurch gekennzeichnet, daß der Magnetfilter (101) die Eingangsstufe der Vorrichtung ist.

12. Vorrichtung nach einem der Ansprüche 1 bis 10, dadurch gekennzeichnet, daß der Magnetfilter (8) innerhalb einer Filtereinrichtung (6) angeordnet ist.

13. Vorrichtung nach Anspruch 11, dadurch gekennzeichnet, daß dem Magnetfilter (101) eine Pumpe (103) mit einem Hebel (104) nachgeordnet ist.

14. Vorrichtung nach Anspruch 13, dadurch gekennzeichnet, daß der Pumpe (103) wahlweise ein Durchlauferhitzer (106) für Öle bzw. ein Kantenspaltfilter bzw. Separator (118) für Kühlmittel bzw. -wasser nachschaltbar ist.

15. Vorrichtung nach Anspruch 14, dadurch gekennzeichnet, daß dem Durchlauferhitzer (106) ein Elektromagnetschocker (107) sowie ein Breitflächenfilter (108, 109) nachgeordnet sind.

16. Vorrichtung nach Anspruch 14, dadurch gekennzeichnet, daß dem Kantenspaltfilter bzw. Separator (118) ein Wärmetauscher bzw. Kühlaggregat (119) nachgeordnet ist.

17. Vorrichtung nach einem der vorangehenden Ansprüche, gekennzeichnet durch eine weitere Pumpe (111).

18. Vorrichtung nach einem der vorangehenden Ansprüche, gekennzeichnet durch ein Doppelfilter (112).

19. Vorrichtung nach einem der vorangehenden Ansprüche, gekennzeichnet durch Sichtfenster (37) in Vor- und/oder Rücklauf.

20. Vorrichtung nach einem der vorangehenden Ansprüche, gekennzeichnet durch eine Probenentnahmestelle.

21. Vorrichtung nach einem der vorangehenden Ansprüche, gekennzeichnet durch einen Durchflußmesser (36, 113).

22. Vorrichtung nach einem der vorangehenden Ansprüche, dadurch gekennzeichnet, daß eine Ölauffangwanne vorgesehen ist, insbesondere unter den Feinstfiltern (16, 115, 201).

## Claims

1. Apparatus for filtering contaminated liquids, particularly oil, used oil, tar oil, as well as cooling agents, cooling water, etc., using filters and at least one pump (9, 103) forcing the liquid through the filters, a high-performance filter (11, 108) being followed by several additional ultra-fine filters (16, 115, 201) arranged parallel to one another in the flow path and a magnetic filter (8, 101) with a magnet which can be connected in for extracting magnetizable solid particles from the liquid.

2. Apparatus according to claim 1, characterized in that the pump (9) is positioned upstream of the high-performance filter (11).

3. Apparatus according to claim 1 or 2, characterized in that the ultra-fine filters (16, 115, 201) can be connected in group-wise for treating the liquid.

4. Apparatus according to one of the claims 1 to 3, characterized in that the ultra-fine filters (16, 115, 201) have a cylindrical housing with a central hollow shaft and that between the two is provided filter material.

5. Apparatus according to one of the preceding claims, characterized in that the inlet stage is a prestorage tank provided with at least one screen (52).

6. Apparatus according to claim 5, characterized in that the inlet (51) to and outlet (2, 2a) from the tank (1) are positioned on different sides of the screen (52).

7. Apparatus according to claim 5 or 6, characterized in that the outlet (2, 2a) from the tank (1) is provided with a float.

8. Apparatus according to one of the claims 5 to 7, characterized in that an extruder (55) is positioned below the inlet (51).

9. Apparatus according to claim 8, characterized in that with the extruder (55) are associated stationary magnet jaws (56) in such a way that the extruder (55) strips collected magnetizable coarse particles and can remove them from the tank (1).

10. Apparatus according to one of the preceding claims, characterized in that upstream of the pump (9) and a first filter (11) is provided a heating device (3) with a water devapourization flow device (4).

11. Apparatus according to one of the claims 1 to 10, characterized in that the magnetic filter (101) is the inlet stage of the apparatus.

12. Apparatus according to one of the claims 1 to 10, characterized in that the magnetic filter (8) is located within a filter means (6).

13. Apparatus according to claim 11, characterized in that the magnetic filter (101) is followed by a pump (103) with a lever (104).

14. Apparatus according to claim 13, characterized in that the pump (103) can optionally be followed by a continuous heater (106) for oil or an edge gap filter or separator (118) for cooling medium or water.

15. Apparatus according to claim 14, characterized in that the continuous heater (106) is followed by an electromagnet shocker (107) and a wide-surface filter (108, 109).

16. Apparatus according to claim 14, characterized in that the edge gap filter or separator (118) is followed by a heat exchanger or cooling unit (119).

17. Apparatus according to one of the preceding claims, characterized by a further pump (111).

18. Apparatus according to one of the preceding claims, characterized by a double filter (112).

19. Apparatus according to one of the preceding claims, characterized by upstream and/or downstream inspection windows (37).

20. Apparatus according to one of the preceding claims, characterized by a sampling point.

21. Apparatus according to one of the preceding claims, characterized by a flowmeter (36, 113).

22. Apparatus according to one of the preceding claims, characterized in that an oil collecting tray is provided, particularly below the ultra-fine filters (16, 115, 201).

## Revendications

1. Dispositif de filtration de liquides pollués, notamment huiles, huiles usées, huiles de goudron ainsi que liquides de refroidissement, eau de refroidissement et liquides analogues, comportant des filtres et au moins une pompe (9, 103) envoyant le liquide dans ces filtres, et dans lequel plusieurs filtres supplémentaires ultrafins (16, 115, 201) placés parallèlement les uns aux autres dans la voie d'écoulement sont placés après un filtre à haut débit (11, 108) et il est prévu un filtre magnétique (8, 101) comportant un aimant pouvant être mis en circuit pour l'extraction des particules solides aimantables du liquide.

2. Dispositif selon la revendication 1, caractérisé en ce que la pompe (9) est placée avant le filtre à haut débit (11).

3. Dispositif selon l'une des revendications 1 et 2, caractérisé en ce que les filtres ultrafins (16, 115, 201) peuvent être mis en circuit par groupes pour le traitement du liquide.

4. Dispositif selon l'une des revendications 1 à 3, caractérisé en ce que les filtres ultrafins (16, 115, 201) présentent un corps cylindrique ayant un axe creux central et que de la matière filtrante est placée entre les deux.

5. Dispositif selon l'une des revendications précédentes, caractérisé en ce que l'étage d'entrée est un réservoir de préstockage pourvu d'au moins un tamis (52).

6. Dispositif selon la revendication 5, caractérisé en ce que l'entrée (51) et la sortie (2, 2a) du réservoir (1) sont placées sur des côtés différents du tamis (52).

7. Dispositif selon l'une des revendications 5 et 6, caractérisé en ce que la sortie (2, 2a) du réservoir (1) est pourvue d'un flotteur.

8. Dispositif selon l'une des revendications 5 à 7, caractérisé en ce qu'une extrudeuse (55) est placée sous l'entrée (51).

9. Dispositif selon la revendication 8, caractérisé en ce que des mâchoires magnétiques fixes (56) sont adjointes à l'extrudeuse (55) de façon telle que celle-ci puisse enlever les grosses particules aimantables rassemblées à cet endroit et les conduire hors du réservoir (1).

10. Dispositif selon l'une des revendications précédentes, caractérisé en ce qu'en amont de la pompe (9) et du premier filtre (11) est placé un dispositif de chauffage (3) comportant un appareil d'enlèvement instantané de la vapeur de l'eau (4).

11. Dispositif selon l'une des revendications 1 à 10, caractérisé en ce que le filtre magnétique (101) est l'étage d'entrée du dispositif.

12. Dispositif selon l'une des revendications 1 à 10, caractérisé en ce que le filtre magnétique (8) est placé à l'intérieur d'un dispositif de filtration proprement dit (6).

13. Dispositif selon la revendication 11, caractérisé en ce qu'après le filtre magnétique (101) est placée une pompe (103) pourvue d'un levier (104).

14. Dispositif selon la revendication 13, caractérisé en ce qu'après la pompe (103) peut être connecté au choix un appareil de chauffage instantané (106) pour les huiles ou un filtre à disques ou un séparateur (118) pour les liquides ou l'eau de refroidissement.

15. Dispositif selon la revendication 14, caractérisé en ce qu'après l'appareil de chauffage instantané (106) sont placés un appareil électromagnétique de production de chocs (107) et un filtre à large surface (108, 109).

16. Dispositif selon la révendication 14, caractérisé en ce qu'après le filtre à disques ou le séparateur (118) est placé un échangeur de chaleur ou un groupe réfrigérant (119).

17. Dispositif selon l'une des revendications précédentes, caractérisé par une pompe supplémentaire (111).

18. Dispositif selon l'une des revendications précédentes, caractérisé par un filtre double (112).

19. Dispositif selon l'une des revendications précédentes, caractérisé par des voyants (37) dans l'aller et/ou le retour.

20. Dispositif selon l'une des revendications précédentes, caractérisé par un point de prise d'échantillons.

21. Dispositif selon l'une des revendications précédentes, caractérisé par un débitmètre (36, 113).

22. Dispositif selon l'une des revendications précédentes, caractérisé en ce qu'une cuve réceptrice d'huile est prévue en particulier sous les filtres ultrafins (16, 115, 201).
